# FASCICULE DE BREVET EUROPEEN

(11) **EP 2 529 272 B1**
(45) Date de publication et mention de la délivrance du brevet: **09.09.2015**
(21) Numéro de dépôt: 11705925.3
(22) Date de dépôt: 25.01.2011
(51) Int. Cl.: G03B 21/54

(54) **DISPOSITIF GONFLABLE POUR LE REGLAGE DE L'INCLINAISON ET/OU DE LA HAUTEUR DE PROJECTION D'UN VIDEOPROJECTEUR**
AUFBLASBARE VORRICHTUNG ZUR EINSTELLUNG DES PROJEKTIONSWINKELS UND/ODER DER HÖHE EINES VIDEOPROJEKTORS
INFLATABLE DEVICE FOR ADJUSTING THE PROJECTION ANGLE AND/OR HEIGHT OF A VIDEO PROJECTOR

(30) Priorité: 25.01.2010 FR 1050477
(43) Date de publication de la demande: 05.12.2012
(73) Titulaire: Klein, Thierry, 59830 Bachy (FR)
(72) Inventeur: Klein, Thierry, 59830 Bachy (FR)
(74) Mandataire: Matkowska, Franck
(86) Numéro de dépôt international: PCT/FR2011/050139
(87) Numéro de publication internationale: WO 2011/089369

(56) Documents cités:
- EP-A2- 2 312 965
- WO-A2-2010/020716
- CN-Y- 2 865 448
- JP-A- 2001 057 927
- JP-A- 2006 349 790
- US-B1- 7 594 698

## Description

### 5 Domaine Technique

La présente invention concerne le domaine de la vidéo projection. Elle a pour un objet un nouveau dispositif permettant le réglage de l'inclinaison et/ou de la hauteur de projection d'un vidéoprojecteur.

### Art antérieur

Jusqu'à présent les vidéoprojecteurs sont équipés, au moins en partie avant, de pieds dont la hauteur est réglable manuellement et individuellement, de manière à permettre le réglage de l'inclinaison et/ou la hauteur de projection, une fois le vidéoprojecteur positionné sur un plan support (table, bureau,...).

Ce réglage manuel de la bonne hauteur de chaque pied est fastidieux. En outre, il oblige généralement à sortir préalablement le vidéoprojecteur de sa mallette de transport.

### Objectif de l'invention

La présente invention vise à proposer une nouvelle solution de réglage de l'inclinaison et/ou de la hauteur de projection d'un vidéoprojecteur, qui permet de simplifier et de rendre plus pratique ce réglage.

### Résumé de l'invention

Cet objectif est atteint au moyen de l'ensemble de vidéo projection de la revendication 1.

Lorsque l'enveloppe est positionnée sous le vidéoprojecteur, il suffit de gonfler plus ou moins l'enveloppe de manière à régler de manière simple et rapide l'inclinaison et/ou la hauteur de projection du vidéoprojecteur.

Plus particulièrement, le l'ensemble de vidéo projection l'invention peut également comporter les caractéristiques énumérées ci-après et prises isolément ou en combinaison les unes avec les autres :
- L'enveloppe gonflable comporte une partie en forme de soufflet, qui permet l'augmentation du volume interne de l'enveloppe sous l'effet de la pression de gonflage.
- L'enveloppe gonflable comporte une embase par rapport à laquelle la partie en forme de soufflet de l'enveloppe peut se déployer sous l'effet de la pression de gonflage.
- La partie en forme de soufflet forme à plat sensiblement un U.
- Le dispositif comporte une sacoche de levage contenant l'enveloppe gonflable.
- Les moyens de gonflage sont positionnés à l'extérieur de la sacoche de levage et sont reliés à l'enveloppe à travers ladite sacoche.
- Le dispositif comporte une première paroi à fonction d'embase, et une deuxième paroi qui est mobile par rapport à la première paroi, et en ce que la position de la deuxième paroi par rapport à la première paroi est réglable au moyen de l'enveloppe gonflable de manière à faire office de plan de levage et/ou d'inclinaison d'un vidéoprojecteur.
- L'inclinaison de la deuxième paroi par rapport à la première paroi est réglable au moyen de l'enveloppe gonflable.
- Les première et deuxième parois sont reliées entre elles par une articulation en sorte de former sensiblement un V dont l'angle d'ouverture est réglable au moyen de l'enveloppe gonflable.
- Les première et deuxième parois sont reliées entre elles, sur leur périphérie, et en dehors de ladite articulation, par une paroi latérale déformable à fonction de soufflet.
- Les première et deuxième parois, et le cas échéant la paroi latérale déformable, constituent des parois de la sacoche de levage.
- Le dispositif comporte une paroi, qui est mobile et dont la position est réglable au moyen de l'enveloppe gonflable de manière à faire office de plan de levage et/ou d'inclinaison d'un vidéoprojecteur.
- Les moyens de gonflage (sont aptes à être retirés en tout ou partie de l'enveloppe gonflable de manière à permettre le dégonflage de l'enveloppe.
- Les moyens de gonflage comportent une poire de gonflage reliée à l'enveloppe gonflable par un tuyau.
- Lee tuyau et/ou la poire de gonflage sont amovibles par rapport à l'enveloppe gonflable, de manière à permettre le dégonflage de l'enveloppe.

Plus particulièrement, l'ensemble de vidéo projection de l'invention peut également comporter les caractéristiques énumérées ci-après et prises isolément ou en combinaison les unes avec les autres :
- Le dispositif de gonflage est positionné sous le vidéoprojecteur.
- L'ensemble comporte une mallette de transport.
- Le dispositif de réglage est placé à l'intérieur de la mallette de transport et est amovible par rapport à la mallette de transport.
- L'ensemble comporte des moyens d'attache permettant d'attacher le dispositif de réglage au vidéoprojecteur au moins pendant la manipulation ou le transport de l'ensemble de vidéo projection.
- Le dispositif de réglage est placé à l'intérieur de la mallette de transport, et peut être mis en oeuvre avec le vidéoprojecteur sans être retiré de la mallette de transport.

### Brève description des figures

D'autres caractéristiques et avantages de l'invention ressortiront à la lecture de la description détaillée qui suit de variantes particulières de réalisation, laquelle description est faite, à titre d'exemple non limitatif et non exhaustif de l'invention, et en référence aux dessins annexés parmi lesquels :
- La figure 1 représente une première variante de réalisation d'un ensemble de vidéo projection de l'invention, en configuration de transport,
- La figure 2 représente l'ensemble de vidéo projection de la figure 2, en configuration d'utilisation,
- La figure 3 illustre un exemple particulier de réalisation d'une enveloppe gonflable pouvant être utilisée pour régler l'inclinaison et/ou la hauteur de projection du vidéoprojecteur de l'ensemble des figures 1 et 2,
- La figure 4 est une représentation schématique à plat et en vue de dessus de l'enveloppe gonflable de la figure 3

### Description détaillé

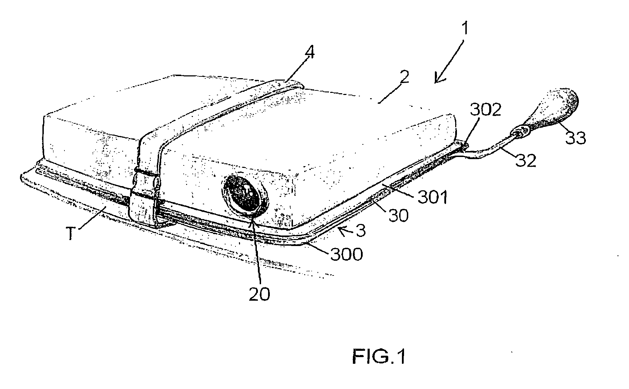

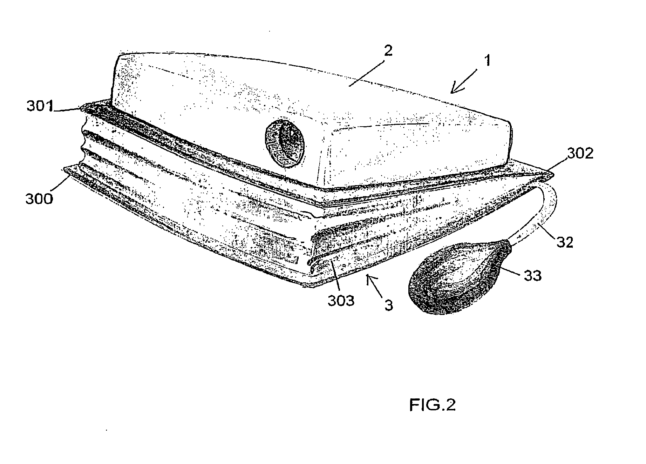

En référence aux figures 1 et 2, dans une variante particulière de réalisation, l'ensemble de vidéo projection 1 de l'invention comporte un vidéoprojecteur 2 comportant des moyens optiques 20 de projection d'une image sur un écran distant (non représenté), et un dispositif 3 permettant un réglage de l'inclinaison et/ou de la hauteur de projection du vidéoprojecteur 1.

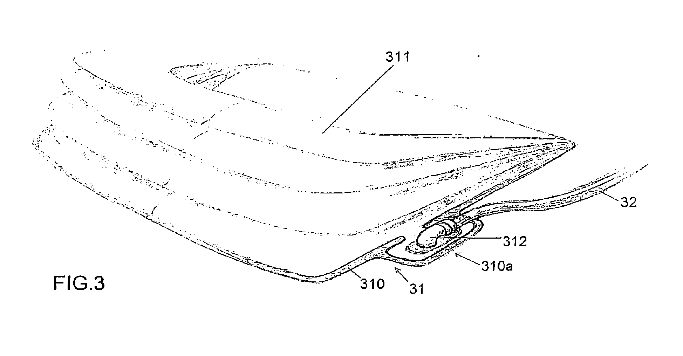

Dans cette variante particulière de réalisation, le dispositif de réglage 3 comporte une sacoche 30, contenant une enveloppe de gonflage distincte, telle que par exemple celle 31 illustrée sur la figure 3.

La sacoche 30 comporte une première paroi 300 à fonction d'embase, et une deuxième paroi 301 reliée à la première paroi 300 par une articulation ou charnière 302, de sorte que les deux parois 300 et 301 forment sensiblement un V dont l'angle d'ouverture est réglable. La première paroi 300 et la deuxième paroi 301 peuvent être réalisées dans un matériau rigide, semi rigide ou souple.

Plus particulièrement, les première 300 et deuxième 301 parois sont également reliées entre elles, sur leur périphérie, et en dehors de ladite articulation 302, par une paroi latérale 303 déformable, à fonction de soufflet. Cette paroi latérale 303 déformable est par exemple réalisée dans un matériau souple ou flexible et est apte
- à être repliée sur elle-même lorsque la deuxième paroi 301 est amenée dans la configuration de la figure 1, en étant positionnée au dessus de la paroi 300 avec un angle d'ouverture du V formé par les deux parois 300 et 301 qui est sensiblement nul, ou
- peut être déployée dans la configuration de la figure 2, de telle sorte que la deuxième paroi 301 est écartée de la première paroi 300 et forme avec cette première paroi 300 un V présentant un angle d'ouverture non nul. Lorsqu'elle est complètement déployée la paroi latérale 303 permet de limiter l'angle maximal d'ouverture du V formé par les deux parois 300 et 301.

Dans l'exemple particulier de réalisation des figures 1 et 2, la paroi latérale déformable 303 à fonction de soufflet présente une structure en accordéon facilitant son repliement sur elle-même. Cette structure particulière en accordéon n'est toutefois pas indispensable. Dans une autre variante de réalisation, la paroi latérale déformable 303 à fonction de soufflet peut également être constituée d'une simple pièce de tissu ou équivalent permettant le rapprochement des deux parois 300 et 301 ou l'écartement des deux parois 300 et 301.

A l'intérieur de la sacoche de levage 30 est logée une enveloppe gonflable telle que celle 31 de la figure 3, dont la structure sera détaillée ultérieurement. Cette enveloppe gonflable est reliée à une première extrémité d'un tuyau 32 traversant la paroi latérale 303 de la sacoche 30. L'autre extrémité du tuyau 32 est reliée à une poire de gonflage 33 positionnée à l'extérieur de la sacoche 30.

En référence à la figure 1, la sacoche de levage 30 contenant l'enveloppe gonflable est positionnée sous le vidéoprojecteur 2 de telle sorte que la paroi 301 est au contact de la face inférieure du vidéoprojecteur 2. Sur la figure1, l'ensemble de vidéo projection 1 est en configuration de transport ou de manipulation, et l'enveloppe gonflable à l'intérieur de la sacoche 30 est totalement dégonflée.

Plus particulièrement, dans cet exemple de réalisation des figures 1 et 2, l'articulation 302 entre les deux parois 300 et 301 est positionnée au niveau de la partie arrière du vidéoprojecteur.

De préférence également, la paroi 300 au contact du vidéo projecteur 1 présente une surface suffisamment importante pour que toute la base du vidéo projecteur soit au contact de cette paroi de levage 300.

Plus particulièrement, dans l'exemple particulier de réalisation de la figure 1, l'ensemble de vidéo projection 1 comporte un moyen d'attache 4 amovible, permettant d'attacher temporairement le vidéoprojecteur 2 avec la sacoche 30 afin de faciliter le transport ou la manipulation de l'ensemble de vidéo projection 1. Plus particulièrement, ce moyen d'attache comporte par exemple une ou plusieurs sangle d'attache amovibles 4, ou équivalent, à serrage réglable, et entourant le vidéoprojecteur 2 et la sacoche 30.

Pour mettre en oeuvre l'ensemble de vidéo projection 1 de la figure 1, un utilisateur positionne cet ensemble sur un support plan T, tel qu'une table, bureau, ..., en posant la paroi 300 de la sacoche 30 sur ledit support. Puis l'utilisateur, enlève le cas échéant le ou les moyens d'attache 4. Ensuite, l'utilisateur gonfle l'enveloppe gonflable logée à l'intérieur de la sacoche 30 en effectuant manuellement des pressions répétées sur la poire de gonflage 33. Le gonflage de l'enveloppe permet d'augmenter le volume de l'enveloppe et d'appliquer sur la paroi 301 de la sacoche 30 une pression mécanique ayant pour effet d'écarter cette paroi 301 de la paroi 300, et de régler l'inclinaison de cette paroi 301 par rapport à la paroi 300. L'utilisateur règle ainsi rapidement et très simplement l'inclinaison du vidéoprojecteur 2.

Dans une autre variante de réalisation, la sacoche 30 pourrait être conçue de telle sorte que lors du gonflage de l'enveloppe, la paroi de levage 301 s'écarte de paroi 300 à fonction d'embase sans modification de son orientation par rapport à la paroi 300. Dans ce cas, le gonflage de l'enveloppe permet de régler la hauteur du vidéoprojecteur par rapport à la paroi 300, et de ce fait la hauteur de vidéoprojection.

L'utilisateur gonfle l'enveloppe au moyen de la poire de gonflage 33 jusqu'à ce que la pression de gonflage soit suffisante pour obtenir l'inclinaison ou le réglage en hauteur souhaité pour le vidéoprojecteur 2. La figure 2 illustre un exemple de réglage d'inclinaison du vidéoprojecteur 2

Une fois la vidéo projection terminée, l'utilisateur dégonfle l'enveloppe contenue dans la sacoche 30. A cet effet, il retire par exemple la poire 33 du tuyau 32, et exerce manuellement une pression sur la paroi 301 pour la rapprocher de la paroi 300 et forcer l'air contenu dans l'enveloppe à être expulsé par le tuyau ouvert 32. Dans une autre variante de réalisation, il est possible également de prévoir des moyens de dégonflage distincts des moyens de gonflage, par exemple en équipant l'enveloppe de gonflage 31 d'une valve de dégonflage accessible à travers la sacoche 30.

Ensuite, l'utilisateur solidarise le cas échéant, au moyen de la sangle 4 ou de tout autre moyen d'attache équivalent, le vidéoprojecteur 2 avec la sacoche 30 contentant l'enveloppe de gonflage à l'état dégonflé (configuration de transport de l'ensemble de vidéo projection 1 illustrée sur là figure 1).

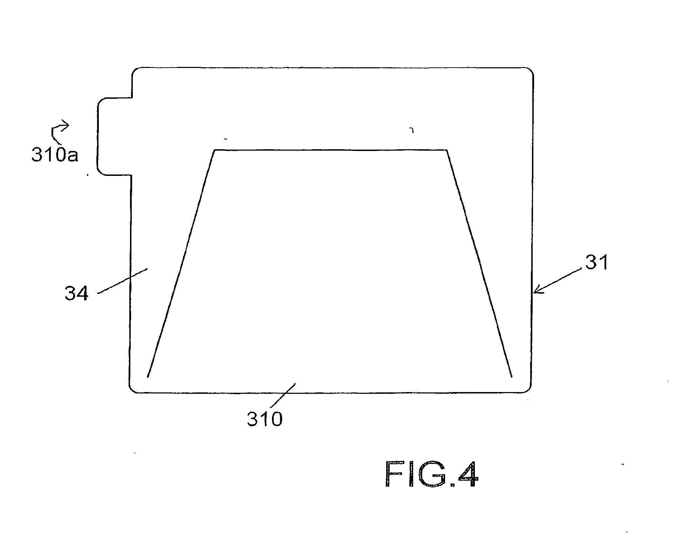

On a représenté sur la figure 3, une structure particulière d'enveloppe gonflable 31 pouvant être logée dans la sacoche 30. Dans cet exemple, l'enveloppe gonflable 31 comporte une embase 310 à laquelle est fixée une partie 311 qui forme un soufflet en accordéon apte à se déployer par rapport à l'embase 310 sous l'effet de la pression de gonflage, de manière à augmenter le volume interne de l'enveloppe sous l'effet de la pression de gonflage. Plus particulièrement la partie 311 en forme de soufflet forme à plat sensiblement un U (figure 4).

Sur un des côtés de l'embase 310 est en outre fixé un raccord coudé 312, dont une extrémité communique avec une ouverture de passage d'air pour le gonflage /dégonflage de la partie 311 en forme de soufflet de l'enveloppe 31, et dont l'autre extrémité est raccordée à une extrémité du tuyau 32.

L'invention n'est pas limitée à la structure particulière du dispositif de réglage 3 qui vient d'être décrit en référence aux figures 1 à 4. En particulier, l'ensemble de vidéo projection de l'invention peut également comporter les caractéristiques techniques énumèrées ci-après de manière non exhaustive et non limitative de l'invention.

L'ensemble de vidéoprojection peut avantageusement comporter une mallette de transport, apte à contenir le vidéo projecteur 2 et le dispositif de réglage 3 positionnés par exemple dans la configuration de transport de la figure 1.

Dans une variante, le dispositif de réglage 3 peut être placé à l'intérieur de la mallette de transport en étant amovible par rapport à la mallette de transport. Dans ce cas, le dispositif de réglage peut être mis en oeuvre avec le vidéoprojecteur 2, tel que précédemment expliqué en référence aux figures 1 et 2, en étant retiré avec le vidéoprojecteur 2 de la mallette de transport.

Dans une autre variante, le dispositif de réglage 3 peut être placé à l'intérieur de la mallette de transport en étant inamovible par rapport à la mallette de transport. Dans ce cas, le vidéoprojecteur est utilisé sans être retiré de la mallette de transport.

Dans une autre variante de réalisation, le dispositif de réglage 3 peut ne pas comporter de sacoche 30, l'enveloppe gonflable 31 ou équivalent étant directement utilisée pour lever le vidéoprojecteur 2, sans être logée dans une sacoche.

Dans une autre variante, il est également possible de modifier l'enveloppe de gonflage de manière à l'interposer entre deux parois telles que les parois 300 et 301, la partie 311 en forme de soufflet de l'enveloppe 31 remplaçant la partie latérale déformable 303 précitée de la sacoche 30.

## Revendications

1. Ensemble de vidéo projection (1) comportant un vidéoprojecteur (2), une mallette de transport, et un dispositif de réglage (3) de l'inclinaison et/ou de la hauteur de projection d'un vidéoprojecteur (2), **caractérisé en ce que** le dispositif de réglage (3) peut être placé à l'intérieur de la mallette de transport et comporte une enveloppe gonflable (31), qui est positionnée ou est apte à être positionnée sous le vidéoprojecteur (2), des moyens de gonflage (32, 33) de ladite enveloppe, et des moyens de dégonflage de ladite enveloppe, les moyens de dégonflage pouvant être ou non distincts des moyens de gonflage, et **en ce que** le dispositif de réglage (3) peut être mis en oeuvre avec le vidéoprojecteur (2) en étant retiré de la mallette de transport.

2. Ensemble selon la revendication 1, **caractérisé en ce que** l'enveloppe gonflable (31) comporte une partie (311) en forme de soufflet, qui permet l'augmentation du volume interne de l'enveloppe sous l'effet de la pression de gonflage.

3. Ensemble selon la revendication 2, **caractérisé en ce que** l'enveloppe gonflable comporte une embase (310) par rapport à laquelle la partie (311) en forme de soufflet de l'enveloppe peut se déployer sous l'effet de la pression de gonflage.

4. Ensemble selon l'une des revendications 2 ou 3, **caractérisé en ce que** la partie (311) en forme de soufflet forme à plat sensiblement un U.

5. Ensemble selon l'une quelconque des revendications 1 à 4, **caractérisé en ce que** dispositif de réglage (3) comporte une sacoche (30) de levage contenant l'enveloppe gonflable (31).

6. Ensemble selon la revendication 5, **caractérisé en ce que** les moyens de gonflage (32, 33) sont positionnés à l'extérieur de la sacoche de levage et sont reliés à l'enveloppe à travers ladite sacoche (30).

7. Ensemble selon l'une quelconque des revendications 1 à 6, **caractérisé en ce que** le dispositif de réglage (3) comporte une première paroi (300) à fonction d'embase, et une deuxième paroi (301) qui est mobile par rapport à la première paroi, et **en ce que** la position de la deuxième paroi (301) par rapport à la première paroi est réglable au moyen de l'enveloppe gonflable (31) de manière à faire office de plan de levage et/ou d'inclinaison d'un vidéoprojecteur (2).

8. Ensemble selon la revendication 7, **caractérisé en ce que** l'inclinaison de la deuxième paroi (301) par rapport à la première paroi (300) est réglable au moyen de l'enveloppe gonflable (31).

9. Ensemble selon la revendication 8, **caractérisé en ce que** les première (300) et deuxième (301) parois sont reliées entre elles par une articulation en sorte de former sensiblement un V dont l'angle d'ouverture est réglable au moyen de l'enveloppe gonflable.

10. Ensemble selon la revendication 9, **caractérisé en ce que** les première (300) et deuxième (301) parois sont reliées entre elles, sur leur périphérie, et en dehors de ladite articulation (302), par une paroi latérale déformable (303) à fonction de soufflet.

11. Ensemble selon la revendication 5 ou 6 et selon l'une quelconque des revendications 7 à 10, **caractérisé en ce que** les première (300) et deuxième (301) parois, et le cas échéant la paroi latérale déformable (302), constituent des parois de la sacoche de levage (30).

12. Ensemble selon l'une des revendications 1 à 4, **caractérisé en ce que** le dispositif de réglage (3) comporte une paroi (301), qui est mobile et dont la position est réglable au moyen de l'enveloppe gonflable (31) de manière à faire office de plan de levage et/ou d'inclinaison d'un vidéoprojecteur (2).

13. Ensemble selon l'une quelconque des revendications 1 à 12, **caractérisé en ce que** les moyens de gonflage (32, 33) sont aptes à être retirés en tout ou partie de l'enveloppe gonflable (31) de manière à permettre le dégonflage de l'enveloppe.

14. Ensemble selon l'une quelconque des revendications 1 à 13, **caractérisé en ce que** les moyens de gonflage comportent une poire de gonflage (33) reliée à l'enveloppe gonflable par un tuyau (32), le tuyau (32) et/ou la poire de gonflage (33) étant de préférence amovibles par rapport à l'enveloppe gonflable, de manière à permettre le dégonflage de l'enveloppe.

15. Ensemble selon selon l'une quelconque des revendications précédentes, **caractérisé en ce que** le dispositif de réglage (3) peut être mis en oeuvre avec le vidéoprojecteur (2) sans être retiré de la mallette de transport.

## Patentansprüche

1. **Videoprojektionsanordnung (1)** mit einem Videoprojektor (2), einem Transportkoffer und einer Einstellvorrichtung (3) zum Einstellen der Neigung und/oder der Projektionshöhe eines Videoprojektors (2), **dadurch gekennzeichnet, dass** die Einstellvorrichtung (3) innerhalb des Transportkoffers angeordnet werden kann und aufweist: eine aufblasbare Hülle (31), die unter dem Videoprojektor (2) positioniert ist oder positioniert werden kann, Aufblaseinrichtungen (32,33) zum Aufblasen der Hülle, und Ablasseinrichtungen zum Ablassen der Hülle, wobei die Ablasseinrichtungen separat von den Aufblaseinrichtungen vorliegen können oder nicht, und dass die Einstellvorrichtung (3) mit dem Videoprojektor (2) betätigt werden kann, indem sie aus dem Transportkoffer herausgenommen wird.

2. Anordnung nach Anspruch 1, **dadurch gekennzeichnet, dass** die aufblasbare Hülle (31) einen Abschnitt (311) in Form eines Balgens aufweist, mit dem das Innenvolumen der Hülle unter der Wirkung des Aufblasdrucks erhöht werden kann.

3. Anordnung nach Anspruch 2, **dadurch gekennzeichnet, dass** die aufblasbare Hülle einen Sockel (310) aufweist, gegenüber welchem der balgförmige Abschnitt (311) der Hülle sich unter der Wirkung des Aufblasdrucks entfalten kann.

4. Anordnung nach einem der Ansprüche 2 oder 3, **dadurch gekennzeichnet, dass** der balgenförmige Abschnitt (311) flachliegend im Wesentlichen eine U-Form hat.

5. Anordnung nach einem der Ansprüche 1 bis 4, **dadurch gekennzeichnet, dass** die Einstellvorrichtung (3) eine Anhebetasche (30) aufweist, welche die aufblasbare Hülle (31) beinhaltet.

6. Anordnung nach Anspruch 5, **dadurch gekennzeichnet, dass** die Aufblaseinrichtungen (32,33) außerhalb der Anhebetasche positioniert sind und durch die Tasche (30) hindurch mit der Hülle verbunden sind.

7. Anordnung nach einem der Ansprüche 1 bis 6, **dadurch gekennzeichnet, dass** die Einstellvorrichtung (3) eine erste Wand (300) mit Sockelfunktion und eine zweite Wand (301) aufweist, die gegenüber der ersten Wand beweglich ist, und dass die Position der zweiten Wand (301) bezüglich der ersten Wand mittels der aufblasbaren Hülle (31) einstellbar ist, so dass sie als Anhebeebene und/oder Neigungsebene für einen Videoprojektor (2) wirkt.

8. Anordnung nach Anspruch 7, **dadurch gekennzeichnet, dass** die Neigung der zweiten Wand (301) bezüglich der ersten Wand (300) mittels der aufblasbaren Hülle (31) einstellbar ist.

9. Anordnung nach Anspruch 8, **dadurch gekennzeichnet, dass** die erste Wand (300) und die zweite Wand (301) über ein Gelenk miteinander verbunden sind, so dass im Wesentlichen eine V-Form gebildet wird, deren Öffnungswinkel mittels der aufblasbaren Hülle einstellbar ist.

10. Anordnung nach Anspruch 9, **dadurch gekennzeichnet, dass** die erste Wand (300) und die zweite Wand (301) an ihrem Umfang und außerhalb des Gelenks (302) über eine verformbare Seitenwand (303) mit Balgfunktion miteinander verbunden sind.

11. Anordnung nach Anspruch 5 oder 6 und nach einem der Ansprüche 7 bis 10, **dadurch gekennzeichnet, dass** die erste Wand (300) und die zweite Wand (301) und gegebenenfalls die verformbare Seitenwand (302) Wände der Anhebetasche (30) bilden.

12. Anordnung nach einem der Ansprüche 1 bis 4, **dadurch gekennzeichnet, dass** die Einstellvorrichtung (3) eine Wand (301) aufweist, die beweglich ist und deren Position mittels der aufblasbaren Hülle (31) einstellbar ist, so dass sie als Anhebeebene und/oder Neigungsebene für einen Videoprojektor (2) wirkt.

13. Anordnung nach einem der Ansprüche 1 bis 12, **dadurch gekennzeichnet, dass** die Aufblaseinrichtungen (32, 33) dazu geeignet sind, vollständig oder teilweise aus der aufblasbaren Hülle (31) herausgenommen zu werden, so dass sie das Ablassen der Hülle gestatten.

14. Anordnung nach einem der Ansprüche 1 bis 13, **dadurch gekennzeichnet, dass** die Aufblaseinrichtungen einen Aufblasballon (33) aufweisen, der über einen Schlauch (32) mit der aufblasbaren Hülle verbunden ist, wobei der Schlauch (32) und/oder der Aufblasballon (33) vorzugsweise von der aufblasbaren Hülle lösbar sind, so dass sie das Ablassen der Hülle gestatten.

15. Anordnung nach einem der vorangehenden Ansprüche, **dadurch gekennzeichnet, dass** die Einstellvorrichtung (3) mit dem Videoprojektor (2) betätigbar ist, ohne aus dem Transportkoffer herausgenommen zu werden.

## Claims

1. Video projection assembly (1) including a video projector (2), a carrying case and a device (3) for adjusting the projection angle and/or height of a video projector (2), **characterized in that** the device (3) can be placed inside the carrying case and comprises an inflatable pouch (31), which is placed or can be placed under the video projector (2), inflating means (32, 33) for inflating said pouch, and deflating means for deflating said pouch, the deflating means being separate from or combined with the inflating means and **in that** the adjusting device (3) can be used with the video projector (2) once the adjusting device has been removed from the carrying case.

2. Assembly according to claim 1, **characterized in that** the inflatable pouch (31) comprises a part (311) forming a bellows that enables the internal volume of the pouch to increase as it is inflated under pressure.

3. Assembly according to claim 2, **characterized in that** the inflatable envelope comprises a base plate (310) in relation to which the bellows shaped part (311) can deploy due to the inflation pressure.

4. Assembly according to one of claims 2 or 3, **characterized in that** the bellows-shaped part (311) is substantially U-shaped when flat.

5. Assembly according to any one of claims 1 to 4, **characterized in that** it comprises a leverage bag (30) containing the inflatable pouch (31).

6. Assembly according to claim 5, **characterized in that** the inflating means (32, 33) is located outside the leverage bag and is connected to the pouch through said bag (30).

7. Assembly according to any one of claims 1 to 6, **characterized in that** the adjusting device (3) comprises a first panel (300) used as the base plate, and a second panel (301) that is mobile relative to the first panel, and **in that** the position of the second panel (301) relative to the first panel can be adjusted using the inflatable pouch (31) so as to act as a leverage and/or tilting plane of a video projector (2).

8. Assembly according to claim 7, **characterized in that** the angle of the second panel (301) relative to the first panel (300) can be adjusted using the inflatable pouch (31).

9. Assembly according to claim 8, **characterized in that** the first (300) and second (301) panels are connected to each other by an articulation so as to substantially form a V shape whereof the opening angle can be adjusted using the inflatable pouch.

10. Assembly according to claim 9, **characterized in that** the first (300) and second (301) panels are connected to each other, on their periphery, and outside said articulation (302), by a deformable lateral panel (303) with a bellows function.

11. Assembly according to claim 5 or 6 and according to any one of claims 7 to 10, **characterized in that** the first (300) and second (301) panels, and if applicable the deformable lateral panel (302), constitute panels of the leverage bag (30).

12. Assembly according to one of claims 1 to 4, **characterized in that** the adjusting device (3) comprises a panel (301) that is mobile and the position of which can be adjusted using the inflatable pouch (31) so as to act as a leverage and/or tilting plane of a video projector (2).

13. Assembly according to any one of claims 1 to 12, **characterized in that** the inflating means (32, 33) can be removed, completely or partially, from the inflatable pouch (31) so as to allow the pouch to be deflated.

14. Assembly according to any one of claims 1 to 13, **characterized in that** the inflating means include an inflating bulb (33) connected to the inflatable pouch by a hose (32), the hose (32) and/or the inflating bulb (33) can be removed from the inflatable pouch, so as to allow the pouch to be deflated.

15. Assembly according to any one of the previous claims **characterized in that** the adjusting device (3) can be implemented with the video projector (2) without being taken out of the carrying case.
